# EUROPEAN PATENT APPLICATION

(11) **EP 2 374 606 A1**
(43) Date of publication of application: **12.10.2011**
(21) Application number: 11250451.9
(22) Date of filing: 08.04.2011
(51) Int. Cl.: B29C 70/44, B29C 70/48

(54) **Composite moulding methods**

(30) Priority: 08.04.2010 GB 1005845
(71) Applicant: GSSC, Inc., Clearwater, FL 33760 (US)
(72) Inventor: Tur, Charles, 43430 Les Vastres (FR)
(74) Representative: Brown, Michael Stanley

(57) **Abstract**

A method of producing composite mouldings in which a seal (2, 22) is placed on a mould surface (13) around a reinforcement pack resting on the mould, the seal (2,22) having a fibrous layer on its presented surface, a membrane (1) is placed over the seal (2, 22) and a vacuum is then applied to the space within the membrane (1) to draw the membrane (1) into sealing engagement with the seal (2, 22) and the seal (2, 22) into sealing engagement with the mould surface (13).

## Description

### Field of the Invention

This invention relates to methods of producing composite mouldings.

The moulding of composites is carried out by many different processes, amongst which is the vacuum infusion process, with which the present invention is primarily concerned.

In the vacuum infusion process, a rigid mould having a smooth border flange (normally disposed horizontally) is laid up with dry fibre reinforcement within the borders. The dry reinforcement fibre may be in mat form, a woven cloth or a multi-axial cloth or a combination of any as a fibre pack. The fibre pack is positioned so that it does not encroach upon the border so that a counter membrane mould of similar size and shape can be laid over the fibre pack and made to seal around the peripheral fibre-free border so that a vacuum may be applied to the underside of the membrane so that the membrane is forced down upon the fibre pack by the outside atmospheric air pressure.

Once the rigid mould, fibre pack and membrane are vacuum-tight as described above, a resin mixture is infused through strategically placed vacuum-secure pipe connections in the membrane into the fibre pack in order to flow into and fill all the dry reinforcement under the membrane.

Reusable membranes designed for the infusion process are normally formed from an elastomeric mouldable material or sheets of various different materials. For example, catalyst-cured or platinum-cured silicones may be used. These are either sprayed or brush-applied and allowed to cure onto a matching mould surface. Also, pre-made silicone sheets may be used, which are tailored to fit the mould size and shape and are joined together with appropriate adhesive systems or vulcanising methods. Other systems use polyurethane polymers in liquid form which are brushed or sprayed onto a matching mould and allowed to cure before being removed and used as a reusable infusion membrane.

It is an object of the present invention to provide an improved method of producing composite mouldings.

It is also an object of the present invention to provide an improved vacuum infusion moulding process.

### Summary of the Invention

According to a first aspect of the present invention there is provided a method of producing composite mouldings in which a seal is placed on a mould surface, the seal having a fibrous layer on its presented surface, a membrane is placed over the seal and a vacuum is then applied to the space within the membrane to draw the membrane into sealing engagement with the seal and the seal into sealing engagement with the surface of the mould.

According to a second aspect of the present invention there is provided a vacuum infusion moulding process which includes the use of a seal having a fibrous layer on its presented surface.

According to a third aspect of the present invention there is provided a method of producing composite mouldings in which a seal is placed on a mould surface, a membrane is placed over the seal, the seal including a plurality of vacuum cups that can be pressed manually into engagement with the mould surface and a vacuum is then applied to the space within the membrane to draw the membrane into sealing engagement with the seal and the seal into sealing engagement with the surface of the mould.

The seal is preferably placed around a reinforcement pack resting on the mould surface.

According to a fourth aspect of the present invention there is provided a vacuum infusion moulding process which includes the use of a seal that incorporates a plurality of vacuum cups that can be pressed manually into sealing engagement with the surface of the mould.

### Brief Description of the Drawings

Figure 1 is an exploded sectional view of the components of a membrane seal edge profile,
Figure 2 is a view similar to Figure 1, but showing the components in their assembled condition,
Figure 3 shows the seal components placed on top of a mould surface,
Figure 4 is a view similar to Figure 3 showing the application of pressure to the seal components so as to effect sealing engagement with the mould surface,
Figure 5 is an isometric view of a mould and a seal, with the seal partly cut away to show a vacuum source and associated connections, and
Figures 6 to 8 are views similar to Figures 2 to 4 but showing a second embodiment of the invention.

### Description of the Preferred Embodiments

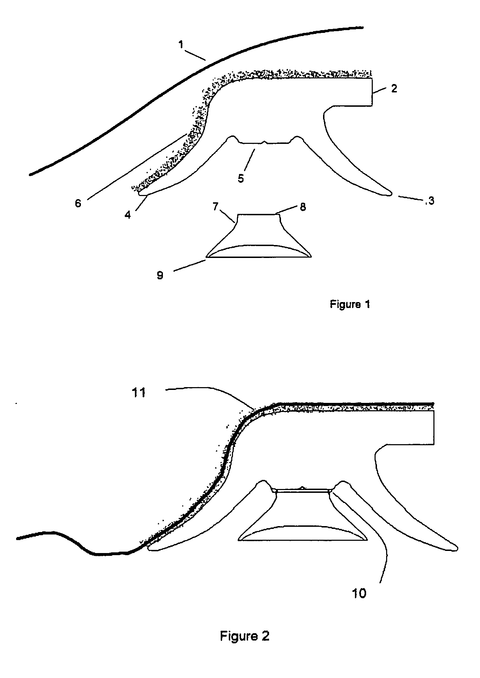

Figure 1 shows an elastomeric seal extrusion 2 the cross-section of which is characterised by lip seal edges 3 and 4 and an underside platform 5 with a layer 6 of a dry "fluffy" material bonded on top of the top face of the extrusion 2 by a proprietary industrial method. The layer of "fluffy" bonded material can be a non-woven man-made fibrous layer and, whatever material is used, it is designed to provide a bondable surface for bonding a reusable membrane 1 to the elastomeric seal extrusion 2.

Further elements of the seal are a plurality of elastomeric vacuum cups 7, each having a bonding platform face 8 and a vacuum cup seal lip 9. There are an appropriate number of vacuum cups 7, evenly spaced along the length of the seal extrusion 2.

The above basic seal components, the membrane 1 and the vacuum cups 7 are assembled together to form the membrane seal edge profile as shown in Figure 2. The membrane 1 is bonded to the seal top face over region 11 and the bonding face 8 of the vacuum cup 7 is bonded to the seal underside platform 5 along bond line 10.

It will be appreciated that the entire membrane 1 will have an unbroken seal bonded in this manner for its entire peripheral length. Furthermore, the vacuum cups 7 are designed to be bonded in multiple positions along the underside of the seal 2. As an example, for every 1 m length of membrane seal 2, there could be ten vacuum cups 7, i.e. a bonded vacuum cup 7 for every 100 mm. spacing.

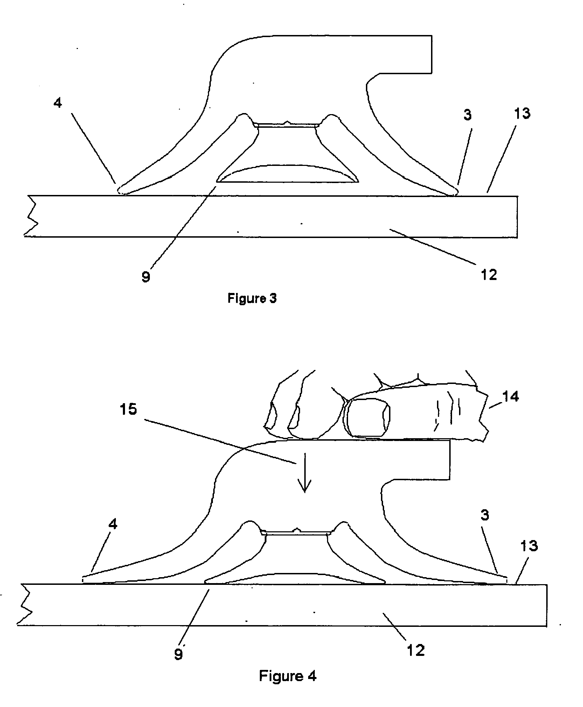

Figure 3 illustrates the seal 2 resting upon an edge of a mould 12 with the lip seal edges 3 and 4 partially engaged on the surface 13 of the mould 12. In this condition, the seal 2 may have its lip seal edges 3 and 4 engaged in some areas of the surface 13 of the mould 12 but it is unlikely that the lip seal edges 3 and 4 will be engaged with the mould surface 13 over the entire mould periphery. The vacuum cup seal lips 9 are, however, spaced from the mould surface 13 by design and at this stage do not engage the mould surface 13. To enable the seal 2 to engage more effectively with the mould surface 13, a hand 14 of an operator is placed on top of the seal 14 and pressure is applied systematically as indicated by the arrow 15 in Figure 4 to pre-engage the seal lips by manually engaging the vacuum cup lips 9 along the length of the seal 2 as shown in Figure 4.

The engagement of the plurality of vacuum cups 7 with the mould surface 13 ensures that the seal extrusion 2 is caused to engage more readily and more effectively with the mould surface 13 along its peripheral length at lips 3 and 4. This provides an effective seal around an enclosure containing the seal and within which a reinforcement pack (not shown) is contained, the reinforcement pack resting on the mould surface 13 and the composition of the reinforcement pack being such as to provide, in known manner, the required strength and other characteristics of the composite moulding that is produced.

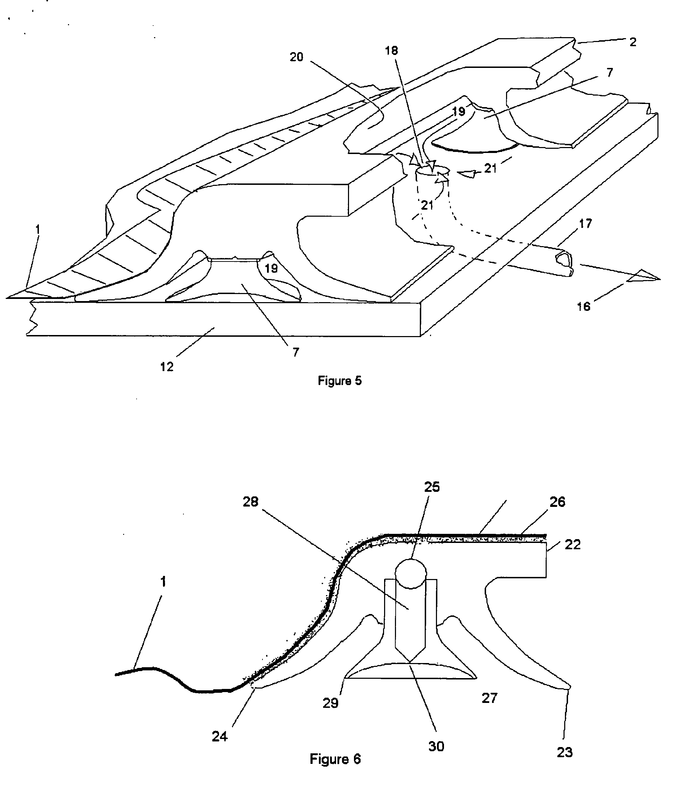

Figure 5 is a part-sectioned isometric view of a mould 12, a seal extrusion 2 with a cut-away section 20 exposing the vacuum cups 7, developed void regions 19, a vacuum port 18, a vacuum pipe 17, a vacuum source 16 and the membrane 1.

Figure 5 illustrates the result of activity of the vacuum source 16, drawing air 21 from the void regions 19 so that the external atmospheric pressure outside the seal 2 will provide an active pressure over the entire seal 2 resulting in it being effectively and reliably engaged with the surface 13 of the mould 12.

In application, it will be appreciated that the user has the ease of seal placement and pre-engagement of the membrane seal 2 to the mould surface 13 so that, when vacuum is applied to the connection pipe 17, the seal 2 is already pre-engaged along the full lengths of its seal lips 3 and 4 and will go vacuum-tight as the atmospheric pressure pushes it downwardly whilst the underside of the seal 2 is under the influence of vacuum.

Resin is introduced into the space bounded by the seal 2 and the membrane 1 by normal procedures and, once the resin has been allowed to cure to produce a composite moulding, the seal 2 and the membrane 1 can be removed for reuse.

A second embodiment of the invention provides that the seal extrusion profile of similar style has the addition of an internal duct as part of its design to ensure that the vacuum cups can be connected to a vacuum source.

Figure 6 illustrates the second embodiment, which includes a seal extrusion profile 22 with a "furry" top face 26 for engagement with the infusion membrane 1. Seal lips 23 and 24 are provided and the seal extrusion 22 includes a tubular duct 25. Each vacuum cup 27 has an internal duct 28 that extends vertically and is provided at its base with a closed lip pair 30. Each vacuum cup 27 has a lower lip profile 29.

The seal 22, the membrane 1 and the vacuum cups 27 are assembled as illustrated in Figure 6 with the vacuum cups 27 suitably fixed and sealed into the underside of seal 22 so that the top of each cup 27 engages and connects with the duct 25.

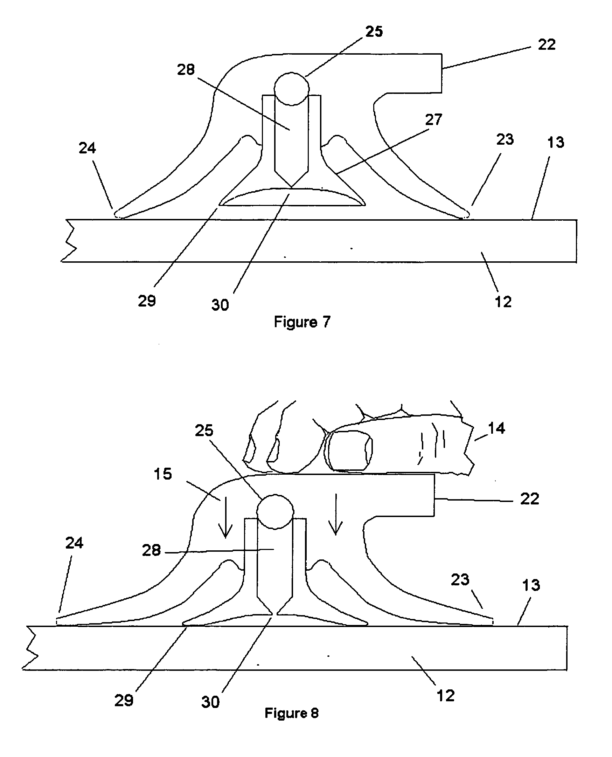

As previously described, the seal 2 with attached membrane 1 is placed on the surface 13 of the corresponding infusion mould 12 as shown in Figure 7. (The membrane 1 is not shown in Figures 7 and 8 for clarity) The seal lips 23 and 24 are resting on the surface 13 but not securely enough to be vacuum-tight. The seal lip 29 of each vacuum cup 27 is resting in free air above the mould surface 13 and each vacuum lip pair 30 is closed.

To engage the seal 22 with the mould surface 13 (as shown in Figure 8) operator hand pressure is again used but, in this instance, the downward hand pressure causes the vacuum cup lip pairs 30 to distort and open. By so doing, the passage of air is permitted from the vacuum cup seal edge 29 through the open vacuum cup lips 30, the vertical ducts 28 and the internal duct 25 of the seal 22.

It will be appreciated therefore that attaching a vacuum source to the duct 25 will aid and secure vacuum cup engagement with the surface 13 of the mould 12. This alternative embodiment of the seal thus provides an active vacuum arrangement to pre-secure the seal extrusion down to the mould surface 13.

Further vacuum connection is used, as before illustrated in Figure 5, through the mould surface connection in order to vacuum lock the entire seal extrusion over its peripheral length and thus provide membrane 1 with a secure vacuum-sealed edge security prior to infusion of the resin matrix.

## Claims

1. A method of producing composite mouldings in which a seal is placed on a mould surface, the seal having a fibrous layer on its presented surface, a membrane is placed over the seal and a vacuum is then applied to the space within the membrane to draw the membrane into sealing engagement with the seal and the seal into sealing engagement with the surface of the mould.

2. A method as claimed in Claim 1, in which the seal includes a plurality of spaced vacuum cups.

3. A method as claimed in Claim 2, in which the seal includes a tubular duct and in which the vacuum cups communicate with the tubular duct.

4. A vacuum infusion moulding process which includes the use of a seal having a fibrous layer on its presented surface.

5. A method of producing composite mouldings in which a seal is placed on a mould surface, a membrane is placed over the seal, the seal including a plurality of vacuum cups that can be pressed manually into engagement with the mould surface and a vacuum is then applied to the space within the membrane to draw the membrane into sealing engagement with the seal and the seal into sealing engagement with the surface of the mould.

6. A method as claimed in Claim 5, in which the seal has a fibrous layer on its presented surface.

7. A vacuum infusion moulding process which includes the use of a seal that incorporates a plurality of vacuum cups that can be pressed manually into sealing engagement with the surface of the mould.

8. A vacuum infusion process as claimed in Claim 7, in which the seal has a fibrous layer on its presented surface.
